# EUROPÄISCHE PATENTSCHRIFT

(11) **EP 2 263 847 B1**
(45) Veröffentlichungstag und Bekanntmachung des Hinweises auf die Patenterteilung: **08.02.2012**
(21) Anmeldenummer: 09007938.5
(22) Anmeldetag: 17.06.2009
(51) Int. Cl.: B29C 39/06, B29C 39/14, G09F 3/04

(54) **Verfahren zur Herstellung von dreidimensionalen Kunststoffetiketten**
Method for producing three-dimensional plastic labels
Procédé de fabrication d'étiquettes en plastique tridimensionnelles

(43) Veröffentlichungstag der Anmeldung: 22.12.2010
(73) Patentinhaber: doro tape Ehlis GmbH & Co. KG., 42855 Remscheid (DE)
(72) Erfinder: Ehlis, Uwe, 42859 Remscheid (DE)
(74) Vertreter: Füssel, Michael

(56) Entgegenhaltungen:
- DE-A1-102007 061 056
- US-A- 5 569 419
- US-A1- 2002 015 829

## Beschreibung

Die vorliegende Erfindung betrifft ein Verfahren nach Anspruch 1 und eine Vorrichtung zur Durchführung des Verfahrens nach Anspruch 15.

Als 3-dimensionale Kunststoffetiketten können in verschiedensten Ausführungsarten geformte 3-dimensionale Kunststoffgebilde verstanden werden, welche zumeist selbstklebend auf verschiedenste Oberflächen aufgebracht werden können.

Ein Beispiel sind selbstklebende 3-dimensionale Kunststoffetiketten, welche durch einen eingebetteten elektronischen Chip zur Warensicherung an Produkten verwendet werden. Andere selbstklebende 3-dimensionale Kunststoffetiketten sind bekannt als Elastikpuffer für unterschiedlichste Anwendungen, beispielsweise als Anschlagpuffer, Antirutschfüße, Abstandshalter usw.

Die Herstellung von derartigen 3-dimensionalen Kunststoffetiketten erfolgt zunächst in Kunststoffspritzgussformen, wobei der dort eingebrachte Kunststoff in den Formen aushärtet. Anschließend wird die zur Haftung der Kunststoffetiketten vorgesehene Seite mit einem doppelseitig klebenden Folienmaterial versehen.

US-A-2002015829 offenbart ein Verfahren zur Herstellung von 3-dimensionalen Etiketten aus Silikonkautschuk.

Anders als bei flachen Etiketten, die in einem vollständig maschinellen Verarbeitungsprozess endlos hintereinander mittels Spenderautomaten auf vorgesehene Güter aufgebracht werden können, weisen die 3-dimensionalen Kunststoffetiketten eine palettenartige Anordnung auf, so dass ein pausenloser Durchlaufprozess für derartige Etiketten mit den derzeitigen Verfahren nicht realisierbar ist.

Es ist deshalb Aufgabe der vorliegenden Erfindung, ein Verfahren anzugeben und eine hierfür geeignete Vorrichtung, mit dessen/deren Hilfe die 3-dimensionalen Kunststoffetiketten am Ende eines pausenlosen vollständig maschinellen Fertigungs-/und Durchlaufprozesses zur weiteren Verarbeitung im gebrauchsfähigen Zustand vorliegen.

Diese Aufgabe wird gelöst mit den Merkmalen des Anspruchs 1 und des Anspruchs 15.

Von wesentlicher Bedeutung ist es, dass ein aushärtbarer Kunststoff in noch fließfähigem Zustand in einer geringen Übermenge im Endlosverfahren in mit vorbestimmter Fördergeschwindigkeit bewegte vorgeheizte Negativ-Formen gebracht wird.

Dadurch, dass der aushärtbare Kunststoff in einer geringen Übermenge in die Negativ-Form gebracht wird, bildet die Übermenge eine plane Oberseite, welche vorteilhafter Weise vollständig mit einem daran haftenden und auf der nach außen weisenden Seite klebend wirkenden Folienmaterial abgedeckt wird.

Vorteilhafterweise wird ein Kunststoff für das Folienmaterial verwendet, dessen Schmelztemperatur mit der Temperatur des frisch aufgebrachten Kunststoffs übereinstimmt, so dass ein Verschmelzen zwischen beiden Kunststoffen erfolgen kann.

Durch den Einsatz von vorgeheizten Negativ-Formen wird der Aushärtungsprozess des Kunststoffes soweit verzögert, dass beim Aufbringen des Folienmaterials der Kunststoff noch im fließfähigen Zustand vorliegt, so dass vorteilhafter Weise ein tragfähiger Verbund zwischen Folienmaterial und dem sich im Aushärteprozess befindlichen Kunststoff im weiteren Durchlaufprozess ergibt.

Darüber hinaus wird das Folienmaterial mit einem Prozessträger beaufschlagt, der vorteilhafter Weise stabilisierend wirkt.

Denkbar wäre auch, dass das Folienmaterial bereits mit einem Prozessträger beaufschlagt ist, bevor die Oberseite der Übermenge damit abgedeckt wird.

Die vorgeheizten Negativ-Formen weisen bevorzugt einen regelbaren Heizkreislauf auf, so dass ein verzögerter Aushärteprozess begünstigt wird und eine gleichmäßige Seigerung stattfindet.

Vorteilhafter Weise wird der aushärtbare Kunststoff erst kurz vor dem Aufbringen aus zwei Komponenten zusammengemischt, so dass erst dort der Aushärteprozess der beiden Komponenten durch z.B. Polyaddition beginnt.

Vorzuschlagen wäre, dass mehrere Negativ-Formen fugenlos hintereinander aufgereiht in Prozessrichtung gefördert werden, so dass sich vorteilhafter Weise ein nahtloses Abbild der Negativ-Form ergibt.

Vorzugsweise ist die Fördergeschwindigkeit der Negativ-Form derart abhängig von dem Temperaturgradienten des Erstarrungsprozesses, dass der Erstarrungsprozess beim Erreichen der nächsten Bearbeitungsstation abgeschlossen ist.

Die Kunststoffetiketten bilden ein gleichmäßiges Raster, so dass sich dadurch vorteilhafter Weise weitere Bearbeitungsschritte besser realisieren lassen.

Die Negativ-Formen werden am Ende des Erstarrungsprozesses von den Kunststoffetiketten getrennt und zum Ausgangspunkt zurückgeführt. Vorteilhafter Weise können so die Negativ-Formen wiederverwendet werden, sie können durch den regelbaren Heizkreislauf beim Transport zum Ausgangspunkt wiedererwärmt werden und die ausgehärteten Kunststoffetiketten werden zur weiteren Verarbeitung freigegeben.

Die Kunststoffetiketten werden am Ende des Erstarrungsprozesses durchgehend bis auf den Prozessträger ausgestanzt und das Restgitter wird nach dem Ausstanzen entfernt.

Dadurch wird erreicht, dass nur noch die für die weitere Verarbeitung relevante Form der Kunststoffetiketten auf dem Prozessträger aufgebracht ist.

Vorzuschlagen wäre, dass die Kunststoffetiketten nach dem Ausstanzen in Rasterabschnitten von mindestens der Breite eines einzigen jeweiligen Kunststoffetikettes, längs zur Förderrichtung vereinzelt werden.

Diese Maßnahme unterstützt die Bereitstellung der Kunststoffetiketten zur weiteren Verarbeitung in einem gebrauchsfähigen Zustand, insbesondere dann, wenn die Rasterabschnitte höchstens eine Breite eines einzigen jeweiligen Kunststoffetikettes aufweisen und diese nach dem Vereinzeln aufgerollt werden.

Vorteilhafter Weise wird so ein Spenden über einen Etikettenspenderautomaten möglich gemacht, genau wie bei flachen Etiketten.

Weitere Vorteile und Merkmale der Erfindung ergeben sich aus den Unteransprüchen und aus der Beschreibung eines Ausführungsbeispiels sowie aus den Zeichnungen, auf die nun Bezug genommen werden.

Es zeigen:
- Fig. 1: eine Vorrichtung zur Durchführung des Verfahrens in Draufsicht;
- Fig. 1a: eine Detailansicht des Ausstanz- und Abziehvorganges;
- Fig.2: eine Vorrichtung zum Durchführen des Verfahrens in Seitenansicht gem. Fig. 1

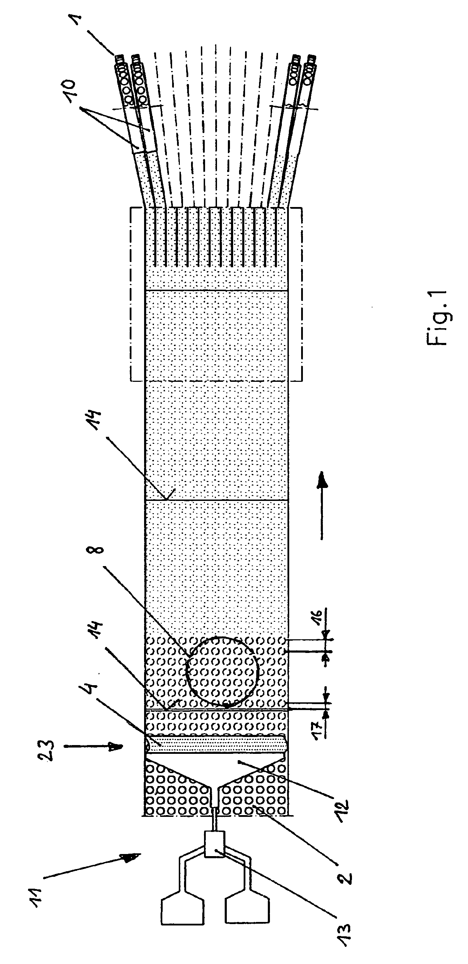

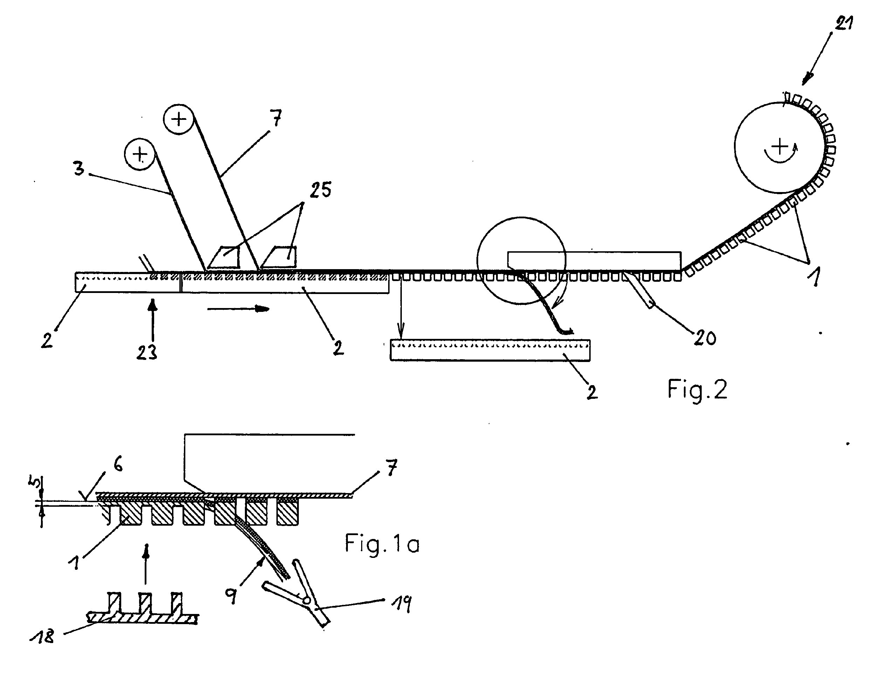

Soweit im Folgenden nichts anderes gesagt ist, beziehen sich gleiche Bezugszeichen der Figuren 1, 1a und 2 stets auf dieselben konstruktiven Merkmale.

Die Figuren zeigen eine Vorrichtung zur Herstellung von 3-dimensionalen Kunststoffetiketten 1. Derartige Kunststoffetiketten werden aus einem aushärtbaren Kunststoff 4 gefertigt, der in Negativ-Formen 2 eingegossen wird. Um eine Haftung der Kunststoffetiketten 1 zu erzielen, werden diese an einer vorgesehenen Seite mit einem doppelseitig klebenden Folienmaterial 3 versehen.

Wesentlich ist, dass im vorliegenden Fall das Verfahren als Endlosverfahren durchgeführt wird.

Zu diesem Zweck zeigen die Figuren eine im Betrieb befindliche erfindungsgemäße Vorrichtung zur Herstellung von 3-dimensionalen Kunststoffetiketten 1.

Mit einer derartigen Vorrichtung wird ein aushärtbarer Kunststoff 4, der in einem noch fließfähigem Zustand vorliegt, im Endlosverfahren in mit vorbestimmter Fördergeschwindigkeit bewegte Negativ-Formen eingebracht.

Wesentlich ist, dass der noch fließfähige Kunststoff mit einer geringen Übermenge eingebracht wird.

Weiterhin ist wesentlich, dass die Negativ-Formen vorgeheizt sind.

Die Vorrichtung zum Durchführen des Verfahrens beinhaltet zu diesem Zweck eine Eingießvorrichtung 11 welche eine Breitschlitzdüse 12 aufweist, die an einer Beaufschlagungsstelle 23 in Richtung zu den Negativ-Formen 2 ausgerichtet ist. Aus der Breitschlitzdüse 12 wird der aushärtbare Kunststoff 4 auf die Negativ-Formen 2 gebracht.

Zur Bewegung der Negativ-Formen 2 ist eine Fördervorrichtung vorgesehen. Es handelt sich um einen Bandförderer.

Nachdem der Kunststoff 4 in die Negativ-Formen gebracht worden ist, steht er im Millimeterbereich über die Oberseite der Negativ-Form hervor.

Man kann sich sicherlich leicht vorstellen, dass die Übermenge 5, die über die Negativ-Form 2 hervorsteht, zunächst einmal auf ihrer Oberseite noch nicht erstarrt ist.

In diesen noch nicht erstarrten Kunststoff wird nun das Folienmaterial 3, von oben kommend, hineingelegt, so dass es Gelegenheit hat, durch lokales Verschmelzen eine Verbindung mit dem noch nicht erstarrten Kunststoff 4 einzugehen.

Auf diese Weise entsteht zwischen den 3-dimensionalen Kunststoffetiketten 1 und dem Folienmaterial 3 ein innig verschmolzener Verbund mit dem Vorteil, dass die nunmehr nach oben weisende Außenseite des Folienmaterials ihrerseits klebend beschichtet ist oder beschichtet werden kann, so dass die Kunststoffetiketten anschließend selbstklebend sind.

Insbesondere Fig.2 zeigt hierzu, dass stromab von der Beaufschlagungsstelle 23 der Negativ-Formen 2 ein Folienmaterial 3 und ein Prozessträger 7 in einer jeweiligen Zuführvorrichtung und mittels einer der Oberseite des Folienmaterials 3 bzw. des Prozessträgers 7 zugewandt wirkenden Andrückvorrichtung 25 auf die Oberseite 6 des aushärtbaren Kunststoffes 4 aufbringbar sind.

Weiterhin zeigen die Figuren, dass das Folienmaterial 3 auf seiner nach außen weisenden klebenden Seite nach der Aufbringung auf den aushärtbaren Kunststoff mit einem Prozessträger 7 beaufschlagt wird.

Infolge der hohen Temperaturen, die von der Übermenge des aushärtbaren Kunststoffs 4 ausgehen, kann das Folienmaterial 3 mit dem Kunststoff einen thermisch verursachten Verbund eingehen.

Bei diesem Verschmelzungsvorgang würde ein Prozessträger 7 nur stören.

Darüber hinaus müsste ein Prozessträger 7 entsprechend temperaturbeständig ausgeführt sein.

Um diese Probleme zu umgehen, wird hier der Prozessträger 7 auf der nach außen weisenden klebenden Seite des Folienmaterials erst an einer Stelle im Durchlaufprozess angebracht, an welcher die Temperatur der Außenseite des Folienmaterials weit unterhalb der Erweichungstemperatur des Prozessträgers 7 liegt.

Ergänzend kann jedoch das Folienmaterial 3 auch bereits mit einem Prozessträger 7 beaufschlagt sein, bevor es mit der Übermenge des aushärtbaren Kunststoffs 4 in Berührung kommt .

Dies gilt zumindest für diejenigen Verfahrensparameter, die eine thermische Schädigung des vorher aufgebrachten Prozessträgers 7 ausschließen.

Von weiterer Bedeutung ist ein Ausführungsbeispiel, bei dem die vorgeheizten Negativ-Formen 2 in einen regelbaren Heizkreislauf eingebunden sind.

Zu diesem Zweck sind die Negativ-Formen 2 mit Heizvorrichtungen ausgestattet, durch welche ein auf entsprechende Temperatur gebrachtes Wärmetransportmittel fließt.

Da der vorliegende Prozess bevorzugt temperaturgesteuert ablaufen soll, sind die einzelnen Heizkreisläufe der einzelnen Negativ-Formen 2 über an sich bekannte Regeleinrichtungen mit einer Heizquelle verbunden, so dass sogar auf dem Weg zwischen der Beaufschlagungsstelle 23 und dem Herausnehmen der Kunststoffetiketten aus den Negativ-Formen 2 ein Temperaturgradient auftreten kann.

Darüber hinaus zeigt insbesondere Fig. 1 eine Weiterbildung, bei welcher der aushärtbare Kunststoff 4 aus zwei Komponenten zusammengemischt wird, bevor er über eine Breitschlitzdüse 12 auf die Negativ-Formen 2 aufgebracht wird.

Zu diesem Zweck werden die beiden Komponenten des Kunststoffs in einer gemeinsamen Mischkammer 13 so durchmischt, dass eine homogene 2K-Kunststoffmasse entsteht, die durch entsprechende Vernetzung erstarrt.

Wie weiterhin insbesondere Fig. 1 zeigt, sind mehrere Negativ-Formen fugenlos hintereinander aufgereiht in der Prozessrichtung, die gemäß Fig. 1 durch den unterhalb des Bildes dargestellten Rechtspfeil angedeutet wird.

Weiterhin ist wesentlich, dass mehrere Negativ-Formen 2 fugenlos hintereinander aufgereiht in Prozessrichtung gefördert werden.

Unter fugenlos ist hierbei zu verstehen, dass die in Förderrichtung noch nicht beaufschlagten Negativ-Formen 2 mit ihren vorauslaufenden Querkanten an die Hinterkanten der in Förderrichtung bereits beaufschlagten Negativ-Formen gedrückt werden, während die Negativ-Formen, die in der Bearbeitungsebene liegen, gleichzeitig auf derselben Höhe zu halten sind, um Höhensprünge im Fertigungsprozess auszuschließen.

Dies wird dadurch erreicht, dass die vorderen und hinteren Querkanten der einzelnen Negativ-Formen entsprechend präzise gefertigt werden, um zwischen den endlos produzierten Kunststoffetiketten 1 stets denselben Abstand in Längsrichtung zu erzeugen.

Das gesamte Entstehungsverfahren ist auch temperaturabhängig.

Aus diesem Grund sollte die Fördergeschwindigkeit der Negativ-Formen 2 abhängig von dem Temperaturgradienten sein, den der Erstarrungsprozess benötigt, so dass am Ende des Erstarrungsprozesses die Kunststoffetiketten der nächsten Bearbeitungsstation zugeführt werden können.

Diese ist in Fig. 1 im rechten Teil des Bildes mit strichpunktierter Linie umrandet.

Hierauf wird noch eingegangen.

Weiterhin zeigen die Figuren, dass die Kunststoffetiketten 1 ein gleichmäßiges Raster 8 bilden.

Hierunter ist zu verstehen, dass die Kunststoffetiketten in Längs- sowie in Querrichtung einen jeweils vorgegebenen Abstand zwischen sich einnehmen.

Aufgrund des bisherigen Herstellungsverfahrens besteht zwischen den einzelnen Kunststoffetiketten 1 aufgrund der für die Erfindung notwendigen Übermenge 5 ein Verbund in Längs- und Querrichtung.

Will man derartige Kunststoffetiketten weiterverarbeiten, müssten sie ausgeschnitten werden.

Zu diesem Zweck bietet es sich an, die einzelnen Kunststoffetiketten am Ende des Erstarrungsprozesses bis auf den Prozessträger 7 durchgehend auszustanzen.

Zwischen der den Kunststoffetiketten zugewandten Fläche des Prozessträgers 7 und der gegenüberliegenden Seite des Folienmaterials 3 besteht aufgrund der klebenden Beschichtung ein adhäsiver Haftverbund, der allerdings leicht lösbar ist, so dass die einzelnen Kunststoffetiketten dann weiteren Bearbeitungsschritten zugeführt werden können.

Wie insbesondere Fig. 1a zeigt, kann das Restgitter 9 nach dem Ausstanzen entfernt werden.

Der Prozessträger 7 mit den daran anhaftenden Haftetiketten wird dann weiter bearbeitet.

Wie weiterhin Fig.2 zeigt, können die Kunststoffetiketten 1 nach dem Ausstanzen in vorgegebenen Rasterabschnitten 10 längs zur Förderrichtung vereinzelt werden.

Die Rasterabschnitte 10 entsprechen in Querrichtung gesehen dem Rastermaß, welches durch die Negativ-Formen in Querrichtung vorgegeben ist.

Es können hierbei 1,2,3 oder mehr Etiketten einem vorgesehenen Rastermaß entsprechen.

Zweckmäßigerweise werden die Kunststoffetiketten jedoch in einzelnen Einerreihen vereinzelt und die vereinzelten Einerreihen dann einzeln aufgewickelt.

Anschließend müssen noch die Negativ-Formen am Ende des Erstarrungsprozesses oder danach, von den Kunststoffetiketten bereits getrennt, zum Ausgangspunkt zurückgeführt werden.

Hierfür dienen herkömmliche Umlauffördermittel.

In einem besonderen Ausführungsbeispiel dienen die Kunststoffetiketten der Anbringung auf Waren des Einzel- oder Großhandels.

Sie werden zu diesem Zweck mit Transponder-Chips versehen, die besonders einfach in die Ausnehmungen der Negativ-Formen eingelegt werden, bevor der aushärtbare Kunststoff in noch fließfähigem Zustand in einer geringen Übermenge im Endlosverfahren in die Negativformen zurückgebracht wird.

Insbesondere Fig. 1 zeigt, dass der aushärtbare Kunststoff 4 aus zwei Komponenten besteht. Die Komponenten werden jeweils über eine Dosiervorrichtung zum Zwecke einer gleichmäßigen Dosierung mit Schläuchen zu einer Mischkammer 13 geleitet, aus der der dort gemischte aushärtbare Kunststoff 4 mit Schläuchen zur Breitschlitzdüse 12 weitergeleitet wird.

Vorteilhafter Weise wird durch eine gleichmäßige Dosierung der Komponenten eine gleichbleibende Qualität des Produktes erreicht.

Ergänzend hierzu wäre vorzuschlagen, dass die Komponenten während des laufenden Prozesses nachfüllbar sind und so vorteilhafter Weise ein in die Negativ-Form 2 pausenlos fließender aushärtbarer Kunststoff eingebracht wird.

Wesentlich für eine nahtlose Aneinanderreihung der Kunststoffetiketten 1 ist, dass die Negativ-Formen 2 mit Anschlusskanten 14 versehen sind.

Durch ein gleichmäßiges Raster 8 der Negativ-Form 2, welches insbesondere in Fig. 1 zu erkennen ist, wird die Vereinzelung der 3-dimensionalen Kunststoffetiketten 1 nach dem Aushärteprozess vereinfacht.

Weiterhin zeigt insbesondere Fig. 1, dass der Abstand 17 zwischen Anschlusskante 14 und Rasteranfang gleich dem halben Lochabstand 16 des gleichmäßigen Rasters 8 in Längsrichtung ist. Dadurch ergibt sich vorteilhafter Weise ein gleichbleibender Abstand der aneinandergereihten 3-dimensionalen Kunststoffetiketten 1.

In Fig.la wird gezeigt, dass die Kunststoffetiketten 1 am Ende des Erstarrungsprozesses mit einer Ausstanzvorrichtung 18 bis auf den Prozessträger 7 durchgehend ausgestanzt werden. Weiterhin wird gezeigt, dass das Restgitter 9 nach dem Ausstanzen mit einer Abzugsvorrichtung 19 abgezogen wird.

Fig.2 zeigt eine Schneidevorrichtung 20, welche die Kunststoffetiketten 1 streifenweise in Querrichtung voneinander trennt, was insbesondere auch in Fig. 1 dargestellt ist.

In den vorliegenden Ausführungsbeispielen wird gezeigt, dass die Kunststoffetiketten 1 nach dem Ausstanzen, in Rasterabschnitten 10 von der Mindestbreite eines einzigen jeweiligen Kunststoffetikettes 1, längs zur Förderrichtung vereinzelt werden.

Diese Maßnahme unterstützt vorteilhafter Weise die Möglichkeit, die 3-dimensionalen Kunststoffetiketten 1 beispielsweise über einen Etikettenspenderautomaten in einen gebrauchsfähigen Zustand zu bringen, insbesondere dann, wenn die Kunststoffetiketten 1 durch ein Rollensystem 21 aufgerollt werden.

Vorgesehen ist auch, dass die Negativ-Form 2 am Ende des Erstarrungsprozesses durch ein Transportsystem von den Kunststoffetiketten getrennt und zum Ausgangspunkt zurückgeführt werden.

Weiterhin wird vorgeschlagen, dass der aus zwei Komponenten bestehende aushärtbare Kunststoff 4 aus Polyol und Isozyanat besteht. Vorteilhafter Weise ergibt sich dadurch ein Werkstoff, der hervorragend für Elastikpuffer geeignet ist und bekannter Weise als Polyurethan bezeichnet wird.

Denkbar wäre auch, dass vor dem Aufbringen des aushärtbaren Kunststoffes 4 an der Beaufschlagungsstelle 23 die Negativ-Form 2 mit elektronischen Chips befüllt werden. Beispielsweise könnten die elektronischen Chips als Warensicherungstransponder dienen, die als integrierte Bestandteile der 3-dimensionalen Kunststoffetiketten 1, durch das erfindungsgemäße Verfahren, in einem gebrauchsfähigen Zustand vorliegen.

Vorzugsweise ist das Folienmaterial 3 Polyesterfolie, deren Erweichungstemperatur so einstellbar ist, dass ein Anhaften auf der Oberseite 6 der Übermenge 5 möglich ist. Wesentlich dabei ist, dass die Polyesterfolie und der bei der Aufbringung noch im fließfähigen Zustand befindliche aushärtbare Kunststoff 4 im weiteren Durchlaufprozess einen tragfähigen Verbund bilden, so dass vorteilhafter Weise die Negativ-Formen 2 am Ende des Aushärteprozesses trennbar von den Kunststoffetiketten 1 sind und dabei die Kunststoffetiketten 1 ihren Halt auf dem Prozessträger 7 beibehalten können.

Als Prozessträger 7 wird Silikonpapier vorgeschlagen.

### Bezugszeichenliste

- 1: 3-dimensionale Kunststoffetiketten
- 2: Negativ-Form
- 3: Folienmaterial
- 4: aushärtbarer Kunststoff
- 5: geringe Übermenge
- 6: Oberseite der Übermenge
- 7: Prozessträger
- 8: gleichmäßiges Raster
- 9: Restgitter
- 10: Rasterabschnitt
- 11: Eingießvorrichtung
- 12: Breitschlitzdüse
- 13: Mischkammer
- 14: Anschlusskante
- 16: Lochabstand des gleichmäßigen Rasters
- 17: Abstand zwischen Anschlusskante und Rasteranfang
- 18: Ausstanzvorrichtung
- 19: Abzugsvorrichtung
- 20: Schneidevorrichtung
- 21: Rollensystem
- 23: Beaufschlagungsstelle
- 25: Andrückvorrichtung

## Patentansprüche

1. Verfahren zur Herstellung von 3-dimensionalen Kunststoffetiketten (1), welche mittels in Negativ-Formen (2) eingegossenem aushärtbarem Kunststoff (4) gefertigt werden, wobei die zur Haftung der Kunststoffetiketten (1) vorgesehene Seite mit einem doppelseitig klebenden Folienmaterial (3) versehen wird, wobei ein aushärtbarer Kunststoff (4) in noch fließfähigem Zustand in einer geringen Übermenge (5) im Endlosverfahren in mit vorbestimmter Fördergeschwindigkeit bewegte vorgeheizte Negativ-Formen (2) gebracht wird, bevor die Oberseite (6) der Übermenge (5) des aufgebrachten noch nicht erstarrten Kunststoffes (4) mit einem daran haftenden und auf der nach außen weisenden Seite klebend wirkenden Folienmaterial (3) abgedeckt wird.

2. Verfahren nach Anspruch 1, **dadurch gekennzeichnet, dass** das Folienmaterial (3) mit einem Prozessträger (7) beaufschlagt wird.

3. Verfahren nach Anspruch 1, **dadurch gekennzeichnet, dass** das Folienmaterial (3) mit einem Prozessträger (7) beaufschlagt ist, bevor die Oberseite (6) der Übermenge (5) damit abgedeck wird.

4. Verfahren nach Anspruch 1, **dadurch gekennzeichnet, dass** die vorgeheizten Negativ-Formen (2) einen regelbaren Heizkreislauf aufweisen.

5. Verfahren nach Anspruch 1, **dadurch gekennzeichnet, dass** der aushärtbare Kunststoff (4) aus zwei Komponenten besteht, welche vor dem Aufbringen zusammengemischt werden.

6. Verfahren nach Anspruch 1, **dadurch gekennzeichnet, dass** mehrere Negativ-Formen (2) fugenlos hintereinander aufgereiht in Prozessrichtung gefördert werden.

7. Verfahren nach Anspruch 6, **dadurch gekennzeichnet, dass** die Fördergeschwindigkeit der Negativ-Formen (2) derart abhängig von dem Temperaturgradient des Erstarrungsprozesses ist, dass der Erstarrungsprozess beim Erreichen der nächsten Bearbeitungsstation abgeschlossen ist.

8. Verfahren nach Anspruch 1, **dadurch gekennzeichnet, dass** die Kunststoffetiketten (1) ein gleichmäßiges Raster (8) bilden.

9. Verfahren nach Anspruch 8, **dadurch gekennzeichnet, dass** die Kunststoffetiketten (1) am Ende des Erstarrungsprozesses durchgehend bis auf den Prozessträger (7) ausgestanzt werden.

10. Verfahren nach Anspruch 9, **dadurch gekennzeichnet, dass** das Restgitter (9) nach dem Ausstanzen entfernt wird.

11. Verfahren nach Anspruch 10, **dadurch gekennzeichnet, dass** die Kunststoffetiketten (1) nach dem Ausstanzen, in Rasterabschnitten (10) von mindestens der Breite eines einzigen jeweiligen Kunststoffetikettes (1), längs zur Förderrichtung vereinzelt werden.

12. Verfahren nach Anspruch 10, **dadurch gekennzeichnet, dass** die Kunststoffetiketten (1) nach dem Vereinzeln aufgerollt werden.

13. Verfahren nach Anspruch 7, **dadurch gekennzeichnet, dass** die Negativ-Formen (2) am Ende des Erstarrungsprozesses von den Kunststoffetiketten (1) getrennt und zum Ausgangspunkt zurückgeführt werden.

14. Verfahren nach Anspruch 1, **dadurch gekennzeichnet, dass** vor dem Aufbringen des aushärtbaren Kunststoffes (4) die Negativ-Formen (2) mit elektronischen Chips befüllt werden.

15. Vorrichtung zur Durchführung des Verfahrens nach Anspruch 1, **dadurch gekennzeichnet, dass** eine Eingießvorrichtung (11) für den aushärtbaren Kunststoff (4) eine Breitschlitzdüse (12) aufweist, die an einer Beaufschlagungsstelle (23) in Richtung zu den Negativ-Formen (2) ausgerichtet ist, und dass eine Fördervorrichtung zum Bewegen der Negativ-Formen (2) vorgesehen ist und dass stromab von der Beaufschlagungsstelle (23) der Negativ-Formen (2) ein Folienmaterial (3) und ein Prozessträger (7) in einer jeweiligen Zuführvorrichtung und mittels einer zur Oberseite des Folienmaterials (3) bzw. des Prozessträgers (7) zugewandt wirkenden Andrückvorrichtung (25) auf die Oberseite (6) des aushärtbaren Kunststoffes (4) aufbringbar ist.

16. Vorrichtung nach Anspruch 15, **dadurch gekennzeichnet, dass** der aushärtbare Kunststoff (4) aus zwei Komponenten besteht, die jeweils über eine Dosiervorrichtung zum Zwecke einer gleichmäßigen Dosierung mit Schläuchen zu einer Mischkammer (13) geleitet werden, aus der der dort gemischte aushärtbare Kunststoff (4) mit Schläuchen zur Breitschlitzdüse (12) geleitet wird.

17. Vorrichtung nach Anspruch 15, **dadurch gekennzeichnet, dass** die Negativ-Formen (2) mit Anschlusskanten (14) versehen sind.

18. Vorrichtung nach Anspruch 17, **dadurch gekennzeichnet, dass** die Negativ-Formen (2) ein gleichmäßiges Raster (8) aufweisen.

19. Vorrichtung nach Anspruch 18, **dadurch gekennzeichnet, dass** der Abstand (17) zwischen Anschlusskante (14) und Rasteranfang gleich dem halben Lochabstand (16) des gleichmäßigen Rasters (8) in Längsrichtung ist.

20. Vorrichtung nach einem der Ansprüche 15 bis 18, **dadurch gekennzeichnet, dass** die Kunststoffetiketten (1) am Ende des Erstarrungsprozesses mit einer Ausstanzvorrichtung (18) bis auf den Prozessträger (7) durchgehend ausgestanzt werden.

21. Vorrichtung nach Anspruch 20, **dadurch gekennzeichnet, dass** das Restgitter (9) nach dem Ausstanzen mit einer Abzugsvorrichtung (19) abgezogen wird.

22. Vorrichtung nach einem der Ansprüche 15 bis 21, **dadurch gekennzeichnet, dass** die Kunststoffetiketten (1) mit einer Schneidevorrichtung (20) streifenweise in Querrichtung voneinander getrennt werden.

23. Vorrichtung nach einem der Ansprüche 15 bis 22, **dadurch gekennzeichnet, dass** die Kunststoffetiketten (1) durch ein Rollensystem (21) aufgerollt werden.

24. Vorrichtung nach einem der Ansprüche 15 bis 23, **dadurch gekennzeichnet, dass** die Negativ-Formen (2) am Ende des Erstarrungsprozesses durch ein Transportsystem von den Kunststoffetiketten (1) getrennt und zum Ausgangspunkt zurückgeführt werden.

25. Vorrichtung nach Anspruch 15, **dadurch gekennzeichnet, dass** der aus zwei Komponenten bestehende aushärtbare Kunststoff (4) aus Polyol und Isozyanat besteht.

26. Vorrichtung nach Anspruch 15, **dadurch gekennzeichnet, dass** das Folienmaterial (3) Polyesterfolie ist, deren Erweichungstemperatur so eingestellt ist, dass ein Anhaften auf der Oberseite (6) der Übermenge (5) möglich ist.

27. Vorrichtung nach Anspruch 15, **dadurch gekennzeichnet, dass** das Prozessträgermittel (7) Siliconpapier ist.

## Claims

1. Method of producing three-dimensional synthetic material labels (1) which are manufactured by means of hardenable synthetic material (4) poured into female moulds (2), wherein the side provided for adhering the synthetic material labels (1) is provided with a film material (3) which is adhesive on two sides, wherein a small surplus amount (5) of hardenable synthetic material (4) in a still flowable state is poured into preheated female moulds (2), which are moved at a predetermined conveying speed, in a continuous process, before the upper side (6) of the surplus amount (5) of the applied but not yet solidified synthetic material (4) is covered with a film material (3) which adheres thereto and acts to adhere to the side facing outwardly.

2. Method as claimed in claim 1, **characterised in that** the film material (3) has a process carrier (7) applied to it.

3. Method as claimed in claim 1, **characterised in that** the film material (3) has a process carrier (7) applied to it, before the upper side (6) of the surplus amount (5) is covered therewith.

4. Method as claimed in claim 1, **characterised in that** the preheated female moulds (2) have a regulatable heating circuit.

5. Method as claimed in claim 1, **characterised in that** the hardenable synthetic material (4) consists of two components which are mixed together prior to application.

6. Method as claimed in claim 1, **characterised in that** several female moulds (2) lined up one behind the other without any joints are conveyed in the process direction.

7. Method as claimed in claim 6, **characterised in that** the conveying speed of the female moulds (2) is dependent upon the temperature gradient of the solidification process such that the solidification process is completed upon arrival at the next processing station.

8. Method as claimed in claim 1, **characterised in that** the synthetic material labels (1) form a uniform raster (8).

9. Method as claimed in claim 8, **characterised in that** at the end of the solidification process the synthetic material labels (1) are punched out all the way to the process carrier (7).

10. Method as claimed in claim 9, **characterised in that** the remaining lattice (8) is removed after the punching out procedure.

11. Method as claimed in claim 10, **characterised in that** after being punched out the synthetic material labels (1) are separated, in raster portions (10) of at least the width of one single respective synthetic material label (1), in a longitudinal manner with respect to the conveying direction.

12. Method as claimed in claim 10, **characterised in that** after being separated the synthetic material labels (1) are rolled up.

13. Method as claimed in claim 7, **characterised in that** at the end of the solidification process the female moulds (2) are separated from the synthetic material labels (1) and returned to the starting point.

14. Method as claimed in claim 1, **characterised in that** prior to application of the hardenable synthetic material (4) the female moulds (2) are filled with electronic chips.

15. Device for carrying out the method as claimed in claim 1, **characterised in that** a casting device (11) for the hardenable synthetic material (4) comprises a slit die (12) which is oriented to an application point (23) in the direction towards the female moulds (2), and **in that** a conveying device for moving the female moulds (2) is provided and **in that** downstream of the application point (23) of the female moulds (2) a film material (3) and a process carrier (7) can be applied to the upper side (6) of the hardenable synthetic material (4) in a respective feeding device and by means of a pressing device (25) which is effective facing towards the upper side of the film material (3) or process carrier (7).

16. Device as claimed in claim 15, **characterised in that** the hardenable synthetic material (4) consists of two components which, for the purpose of uniform metering with tubes, are each directed via a metering device to a mixing chamber (13), from which the hardenable synthetic material (4) which is mixed at this location is directed by tubes to the slit die (12).

17. Device as claimed in claim 15, **characterised in that** the female moulds (2) are provided with connection edges (14).

18. Device as claimed in claim 17, **characterised in that** the female moulds (2) have a uniform raster (8).

19. Device as claimed in claim 18, **characterised in that** the spacing (17) between the connection edge (14) and beginning of the raster is equal to half the hole spacing (16) of the uniform raster (8) in the longitudinal direction.

20. Device as claimed in any one of claims 15 to 18, **characterised in that** at the end of the solidification process the synthetic material labels (1) are punched out all the way to the process carrier (7) by means of a punch-out device (18).

21. Device as claimed in claim 20, **characterised in that** after the punching out procedure the remaining lattice (9) is removed by means of a removal device (19).

22. Device as claimed in any one of claims 15 to 21, **characterised in that** the synthetic material labels (1) are separated from each other into strips in the transverse direction by means of a cutting device (20).

23. Device as claimed in any one of claims 15 to 22, **characterised in that** the synthetic material labels (1) are rolled up by means of a roller system (21).

24. Device as claimed in any one of claims 15 to 23, **characterised in that** at the end of the solidification process the female moulds (2) are separated from the synthetic material labels (1) and are returned to the starting point by means of a transport system.

25. Device as claimed in claim 15, **characterised in that** the hardenable synthetic material (4) which consists of two components consists of polyol and isocyanate.

26. Device as claimed in claim 15, **characterised in that** the film material (3) is polyester film, of which the softening temperature is adjusted such that adhesion to the upper side (6) of the surplus amount (5) is possible.

27. Device as claimed in claim 15, **characterised in that** the process carrier means (7) is silicone paper.

## Revendications

1. Procédure de fabrication d'étiquettes en matière plastique tridimensionnelles (1) qui sont fabriquées au moyen de matière plastique thermodurcissable (4) coulée dans des moules négatifs, dont la face prévue pour le collage des étiquettes plastiques (1) est équipée d'un matériau en feuille à double face collante (3), ce faisant, une matière plastique thermodurcissable (4) dans un état encore liquide est coulée en continu avec un faible excès (5) dans les moules négatifs (2) préchauffés et mûs avec une vitesse prédéterminée, avant que la surface supérieure (6) de l'excès (5) de la matière plastique coulée (4) et non encore durcie, ne soit recouverte d'un matériau en feuille (3) y adhérant et dont la face adhésive est orientée vers l'extérieur.

2. Procédure selon revendication 1, **caractérisée par le fait que** le matériau en feuille (3) est enduit d'un support de processus (7).

3. Procédure selon revendication 1, **caractérisée par le fait que** le matériau en feuille (3) est enduit d'un support de processus (7), avant que la surface supérieure (6) de l'excès (5) n'en soit recouverte.

4. Procédure selon revendication 1, **caractérisée par le fait que** les moules négatifs préchauffés (2) comportent un cycle de chauffage réglable.

5. Procédure selon revendication 1, **caractérisée par le fait que** la matière plastique thermodurcissable (4) est constituée de deux composantes qui sont mélangées avant application.

6. Procédure selon revendication 1, **caractérisée par le fait que** plusieurs moules négatifs (2) sont convoyés sans joint alignés l'un derrière l'autre dans la direction du processus.

7. Procédure selon revendication 6, **caractérisée par le fait que** la vitesse de convoyage des moules négatifs (2) dépend du gradient de température du processus de solidification de telle manière que le processus de solidification soit achevé à l'accès du prochain poste de traitement.

8. Procédure selon revendication 1, **caractérisée par le fait que** les étiquettes de matière plastique (1) forment une trame régulière (8).

9. Procédure selon revendication 8, **caractérisée par le fait que** les étiquettes de matière plastique (1) à la fin du processus de solidification sont estampées en continu jusqu'au support de processus (7).

10. Procédure selon revendication 9, **caractérisée par le fait que** le treillis rémanent (9) est éliminé après découpage.

11. Procédure selon revendication 10, **caractérisée par le fait que** les étiquettes de matière plastique (1) sont isolées après découpage en sections de trame (10) d'au moins la largeur d'une seule étiquette plastique respective (1), dans le sens de la direction de convoyage.

12. Procédure selon revendication 10, **caractérisée par le fait que** les étiquettes de matière plastique (1) sont roulées après avoir été isolées.

13. Procédure selon revendication 7, **caractérisée par le fait que** les moules négatifs (2) à la fin du processus de solidification sont séparées des étiquettes de matière plastique (1) et ramenées au point de départ.

14. Procédure selon revendication 1, **caractérisée par le fait qu'**avant application de la matière plastique thermodurcissable (4), les moules négatifs (2) avec sont remplies de chips électroniques.

15. Dispositif d'exécution de la procédure selon la revendication 1, **caractérisée par le fait qu'**un dispositif de coulée (11) de la matière plastique thermodurcissable (4) présente une filière plate (12) alignée sur un point d'injection (23) en direction des moules négatifs (2), et **par le fait qu'**un dispositif de convoyage est prévu visant au déplacement des moules négatifs (2), et **par le fait qu'**en aval du poste d'injection (23) des moules négatifs (2) un matériau en feuille (3) et un support de processus (7) puisse être monté sur la surface supérieure (6) la matière plastique thermodurcissable (4) agissant dans un dispositif d'alimentation respectif et au moyen d'un dispositif de serrage (25) orienté vers la surface supérieure du matériau en feuille (3), respectivement du support de processus (7).

16. Dispositif selon revendication 15, **caractérisée par le fait que** la matière plastique thermodurcissable (4) se compose de deux composantes qui sont amenées respectivement par tubes à travers un dispositif de dosage assurant un dosage régulier vers une chambre de mélange (13), de laquelle la matière plastique thermodurcissable (4) qui y est mélangée, est amenée par tubes à la filière plate (12).

17. Dispositif selon revendication 15, **caractérisée par le fait que** les moules négatifs (2) sont équipés de bords de raccordement (14).

18. Dispositif selon revendication 17, **caractérisée par le fait que** les moules négatifs (2) présentent une trame égale (8).

19. Dispositif selon revendication 18, **caractérisée par le fait que** la distance (17) entre le bord de raccordement (14) et la tête de trame soit égale à la demi-distance de perforation (16) de la trame régulière (8) dans le sens de la longueur.

20. Dispositif selon une des revendications 15 à 18, **caractérisée par le fait que** les étiquettes de matière plastique (1) à la fin du processus de solidification sont estampées en continu avec un dispositif de découpe (18) jusqu'au support de processus (7).

21. Dispositif selon revendication 20, **caractérisée par le fait que** le treillis rémanent (9) est enlevé après découpage avec un dispositif d'enlèvement (19).

22. Dispositif selon une des revendications 15 à 21, **caractérisée par le fait que** les étiquettes de matière plastique (1) sont séparées l'une de l'autre en bande dans le sens transversal au moyen d'un dispositif de découpe (20).

23. Dispositif selon une des revendications 15 à 22, **caractérisée par le fait que** les étiquettes de matière plastique (1) sont enroulées par un système de d'enroulement (21).

24. Dispositif selon une des revendications 15 à 23, **caractérisée par le fait que** les moules négatifs (2) à la fin du processus de solidification sont séparés des étiquettes de matière plastique (1) par un système de transport et ramenés au point de départ 15.

25. Dispositif selon revendication 15, **caractérisée par le fait que** la matière plastique thermodurcissable (4), constituée de deux composantes, se compose de polyalcool et d'isocyanate.

26. Dispositif selon revendication 15, **caractérisée par le fait que** le matériau de feuille (3) est une feuille de polyester dont la température de ramollissement est réglée de telle sorte qu'une adhésion sur la surface supérieure (6) de l'excès (5) soit possible.

27. Dispositif selon revendication 15, **caractérisée par le fait que** le matériau de support de processus (7) est un papier siliconé.
